# EUROPÄISCHE PATENTANMELDUNG

(11) **EP 2 366 581 A1**
(43) Veröffentlichungstag der Anmeldung: **21.09.2011**
(21) Anmeldenummer: 10002120.3
(22) Anmeldetag: 02.03.2010
(51) Int. Cl.: B60M 1/24, F16L 3/237, F16B 7/04, H02G 7/08

(54) **Bandbride**

(71) Anmelder: Furrer + Frey AG, 3000 Bern 6 (CH)
(72) Erfinder: Furrer, Beat, 3012 Bern (CH); Principe, Patrick, 3015 Bern (CH)
(74) Vertreter: von Bülow, Tam

(57) **Zusammenfassung**

Die Bandbride zum Fixieren oder Verbinden von zwei parallel verlaufenden Rohren (19,20) oder Stangen besteht aus einem langgestreckten biegbaren Band von im wesentlichen konstanter Breite (B), das ausgehend von einer Stirnseite (6) jeweils unmittelbar aufeinanderfolgend einen geradlinigen ersten Abschnitt (2), einen konvexen zweiten Abschnitt (3), einen konkaven dritten Abschnitt (4) und einen geradlinigen vierten Abschnitt (5) aufweist. Scheitelpunkte (14, 15) des konvexen und des konkaven Abschnittes (3, 4), die an gegenüberliegenden Seitenkanten (9, 8) liegen, sind um eine Länge (D) nach innen zur Bandmitte (12) hin versetzt. Beim Umwickeln eines Rohres (19) haben damit die Seitenkanten (8, 9) an einer Kreuzungsstelle (21) einen Abstand (2D) zueinander.

## Beschreibung

Die Erfindung bezieht sich auf eine Bandbride gemäß dem Oberbegriff des Patentanspruches 1.

Bandbriden dienen dazu, Rohre oder Stangen zu befestigen. Sie werden auch häufig als Rohrschellen bezeichnet. Eine übliche Form von Bandbriden besteht aus einem langgestreckten biegbaren Band, an dessen Enden eine Spannvorrichtung angebracht werden kann, die im einfachsten Fall aus einer Schraube besteht, die durch an den Enden des Bandes vorhandene Löcher gesteckt wird. In abgewickelter Draufsicht sind diese Bänder geradlinig mit konstanter Breite. Sie bestehen meist aus biegbarem und zugfestem Metall.

Stellt sich die Aufgabe, zwei parallel verlaufende Rohre an einem Träger zu befestigen, so verwendet man zwei Rohrschellen, was den Materialeinsatz und den Aufwand für die Montage verdoppelt. Auch bedingt dies im Regelfall einen gewissen Mindestabstand der Rohre, damit genügend Raum für die Handhabung eines Montagewerkzeuges, wie z.B. eines Schraubenschlüssels oder eines Schraubenziehers, vorhanden ist.

Für eine Vielzahl von unterschiedlichen Anwendungsfällen sind auch Doppelrohrschellen bekannt, beispielsweise aus DE 9306760 U1, DE 9213835 U1, DE 7221690 U, DE 6905149 U, DE 1648294 U, DE 669980 A und DE 377115 A. All diesen Doppelrohrschellen ist gemeinsam, daß sie mindestens zwei spiegelsymmetrisch ausgebildete Teile haben, die an die Kontur der zu verbindenden Rohre angepaßt sind, und durch eine mittige Schraube im Verbindungssteg zwischen den die Rohre aufnehmenden Teilen verbunden werden (DE 9306760 U1, DE 6905149 U, DE 7221690 U, DE 377115 A). Die beiden Teile umgreifen dabei jeweils maximal den halben Umfang der jeweiligen Rohre. Auch müssen sie aus starrem Material sein und daher möglichst exakt an den Durchmesser der Rohre angepaßt sein.

Die DE 669980 A koppelt zwei Rohrschellen durch ein zwischen ihnen liegendes Scharnier, wobei beide Rohrschellen jeweils separate Schließ- oder Spannvorrichtungen haben.

Bei der DE 1648294 U sind zwei Hälften einer Doppelrohrschelle an einer Außenseite durch ein gelenkiges Scharnier miteinander verbunden, während auf der gegenüberliegenden anderen Außenseite eine Schließvorrichtung angebracht ist.

Die 9213835 U1 schlägt eine Doppelrohrschelle mit drei Schellenelementen vor, die jeweils zwei nach außen ragende Laschen mit einer Durchgangsbohrung aufweisen, durch die beidseitig Spannschrauben hindurchgeführt werden.

Aufgabe der Erfindung ist es, die Bandbride der eingangs genannten Art dahingehend zu verbessern, daß sie bei geringem Materialeinsatz und vereinfachter Montage mindestens zwei parallel zueinander verlaufende Rohre fixieren kann, wobei der wechselseitige Abstand der beiden Rohre möglichst gering ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung besteht darin, ein biegbares zugfestes Band so zuzuschneiden, daß aufeinanderfolgend ausgehend von einem Ende ein geradliniger Abschnitt, ein konvexer Abschnitt, ein konkaver Abschnitt und ein geradliniger Abschnitt vorhanden sind, wobei ein Scheitelpunkt des konvexen Abschnittes und ein Scheitelpunkt des konkaven Abschnittes jeweils nach innen in Richtung zu einer der Kontur folgenden Mittellinie versetzt sind. Tangenten an die Scheitelpunkte, die parallel zur Mittellinie der geradlinigen Abschnitte verlaufen, sind also in Richtung zum Inneren des Bandes hin versetzt. Wird der zwischen den genannten Scheitelpunkten liegende Teil des Bandes um ein Rohr gewickelt, ist zwischen den an einer Kreuzungsstelle liegenden Seitenkanten des Bandes ein kleiner Zwischenraum, der bei einem bevorzugten Ausführungsbeispiel etwa der Dicke des Bandes entspricht. Der in Längsrichtung des Bandes gemessene Abstand zwischen den beiden Scheitelpunkten entspricht im wesentlichen dem Umfang des ersten zu haltenden Rohres. Durch den genannten Versatz der Scheitelpunkte ist auch bei abweichendem Rohrdurchmesser eine Toleranz vorhanden, die sicherstellt, daß sich die an der Kreuzungsstelle gegenüberliegenden Seitenkanten des Bandes nicht berühren oder überlappen.

Dem Fachmann ist klar, daß dieses Prinzip auch für mehr als zwei Rohre angewandt werden kann, indem man weitere konkave und konvexe Abschnitte einfügt, die zwischen einen geradlinigen Abschnitt und die gewellten Abschnitte eingefügt werden.

Nach einer vorteilhaften Weiterbildung der Erfindung haben die geradlinigen Abschnitte an den jeweiligen Enden des Bandes eine gekrümmte Seitenkante, so daß sie sich beim Umfalten an die Kontur der dann gegenüberliegenden Form der konkaven oder konvexen Seitenkante anpasst. Durch die so gebildeten Schlaufen kann ein Bolzen mit einer Durchgangsbohrung hindurchgesteckt werden, wobei die beiden Bolzen dann mit einer Schraube verspannt werden.

Im folgenden wird die Erfindung anhand eines Ausführungsbeispieles im Zusammenhang mit der Zeichnung ausführlicher erläutert. Es zeigt:
Fig. 1 eine ebene Darstellung einer abgewickelten Bandbride nach einem Ausführungsbeispiel der Erfindung;
Fig. 2 einen Querschnitt durch die Bandbride bei der Befestigung von zwei Rohren;
Fig. 3 eine Seitenansicht der Bandbride nach dem ersten Ausführungsbeispiel der Erfindung;
Fig. 4 eine erste perspektivische Darstellung der Bandbride nach dem ersten Ausführungsbeispiel der Erfindung;
Fig. 5 eine zweite perspektivische Darstellung der Bandbride nach dem ersten Ausführungsbeispiel der Erfindung;
Fig. 6 eine Seitenansicht von zwei hintereinander angeordneten Bandbriden nach der Erfindung;
Fig. 7 eine Draufsicht von oben auf die Bandbride der Fig. 6;
Fig. 8 eine perspektivische Darstellung der Bandbride nach den Figuren 6 und 7.

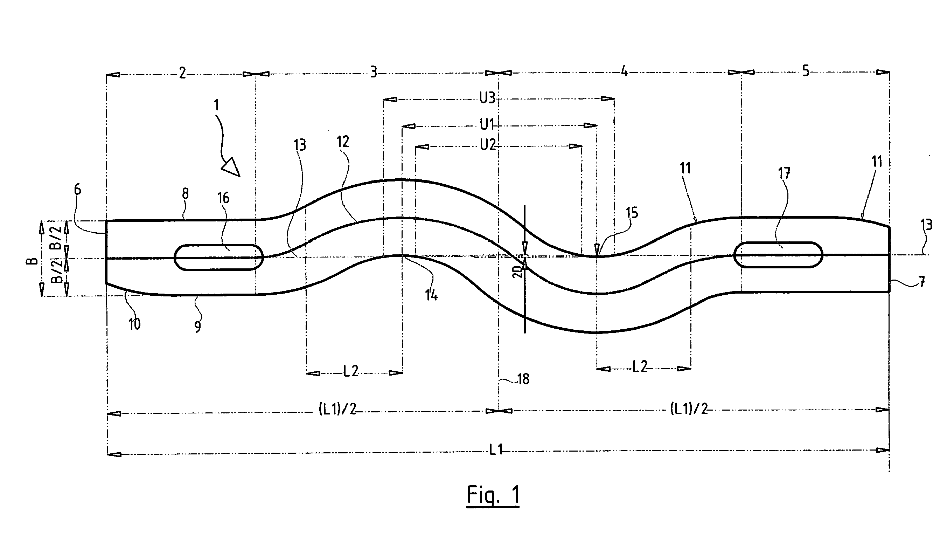

Fig. 1 zeigt die Bandbride 1 im abgewickelten ebenen Zustand. Sie hat im wesentlichen vier voneinander unterscheidbare Abschnitte, nämlich einen ersten im wesentlichen geradlinigen Abschnitt 2, einen konvex gebogenen zweiten Abschnitt 3, einen dritten konkav gebogenen Abschnitt 4 und einen vierten geradlinigen Abschnitt 5, wobei die Abschnitte 2 bis 5 in der genannten Reihenfolge unmittelbar aufeinanderfolgen.

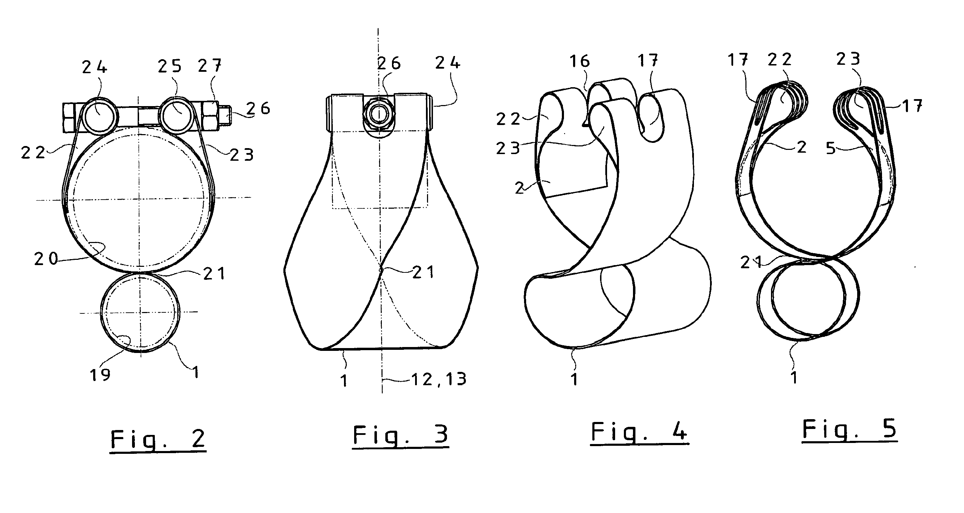

Die Bandbride 1 hat im wesentlichen eine konstante Breite B und ist lediglich im Bereich ihrer Stirnkanten 6 und 7 an jeweils nur einer Seitenkante 8 bzw. 9 mit einer Rundung 10 bzw. 11 versehen, so daß dort die Breite etwas geringer ist. Eine der gekrümmten Kontur folgende Mittellinie 12 ist in fett gestrichelter Linie dargestellt und eine durch die Mitte der beiden geradlinigen Abschnitte 2 und 5 verlaufende "Mittelachse" 13 ist in dünn gestrichelter Linie dargestellt. Im montierten Zustand an zwei Rohren fallen die Mittellinie 12 und die Mittelachse 13 zusammen und bilden in den Seitenansicht der Fig. 3 eine gerade Linie.

Der zweite konvexe Abschnitt hat an der Seitenkante 9 einen Scheitelpunkt 14 und der konvexe dritte Abschnitt 4 hat an der gegenüberliegenden Seitenkante 8 einen Scheitelpunkt 15. Der Scheitelpunkt 14 ist gegenüber der Mittelachse 13 in Richtung zur Mittellinie 12 hin versetzt, so daß die Seitenkante 8 in diesem Bereich die Mittelachse 13 schneidet. In entsprechender Weise ist auch der Scheitelpunkt 15 des dritten konkaven Abschnittes 4 in Richtung zur Mittellinie 12 hin versetzt, so daß die Seitenkante 8 in diesem Bereich die Mittelachse 13 schneidet. Der jeweilige Versatz beider Scheitelpunkte ist gleich groß und beträgt hier einen Wert D, der bei einem bevorzugten Ausführungsbeispiel der Dicke der Bandbride 1 entspricht.

Der Abstand der beiden Scheitelpunkte 14 und 15 gemessen parallel zur Mittelachse 13 beträgt U1, was dem Umfang eines ersten zu befestigenden Rohres entspricht. Wird dieser Bereich um ein Rohr gewickelt, so liegen sich die Scheitelpunkte 14 und 15 an einer Kreuzungsstelle (21 in Fig. 2,3 und 5) einander gegenüber und haben dort den Abstand 2D voneinander, wenn der Umfang des Rohres exakt der Länge U1 entspricht. Hinsichtlich des Umfanges eines ersten Rohres bzw. der Länge des Abschnittes U1 existiert damit ein Toleranzbereich zwischen Maßen U2 und U3, die durch Schnittpunkte der Seitenkanten 8 und 9 mit der Mittelachse 13 definiert sind.

Im Bereich der beiden geradlinigen Abschnitte 2 und 5 sind jeweils Langlöcher 16 und 17 vorgesehen, deren Mitte auf der Mittelachse 13 liegt.

Die gesamte Bandbride hat von der Stirnkante 6 zur Stirnkante 7 eine Länge L1 mit zwei doppel-spiegelsymmetrischen Hälften, die mit (L1)/2 bezeichnet sind, d.h. wird eine Hälfte sowohl um die Mittelachse 13 als auch eine vertikale Mittellinie 18 gespiegelt, so erhält man die jeweils andere Hälfte.

Nachfolgend wird die Anwendung der Bandbride der Fig. 1 im Zusammenhang mit den Fig. 2 bis 5 beschrieben. In Fig. 2 sind zwei Rohre 19 und 20 zu sehen, die parallel zueinander mit möglichst geringem Abstand befestigt werden sollen. Das erste Rohr 19 habe einen Umfang entsprechend dem Maß U1 der Fig. 1, während das zweite Rohr 20 einen größeren Umfang hat. Der mit U1 in Fig. 1 bezeichnete Bereich der Bandbride 1 wird um das erste Rohr 19 gewickelt, wobei sich dann die beiden Scheitelpunkte 14 und 15 an der Stelle 21 der Fig. 2 kreuzen, ohne daß sich aber dort die Seitenkanten 8 und 9 berühren oder gar überlappen. Sodann werden die verbleibenden Teile der Bandbride teilweise um das zweite Rohr 20 gewickelt, wobei die beiden geradlinigen Abschnitte 2 und 5 um die Mitte der Langlöcher 16 und 17 zur Bildung von Schlaufen 22 und 23 umgebogen werden und zwar vorzugsweise nach "innen", so daß die geradlinigen Abschnitte teilweise das zweite Rohr 20 berühren und gleichzeitig zwischen dem Rohr 20 und der Bandbride eingeklemmt werden.

In die Schlaufen 22 und 23 werden Stifte 24 und 25 eingesetzt, die Bohrungen aufweisen, die mit den an dieser Stelle umgebogenen Langlöchern 16 und 17 fluchten, so daß dort eine Schraube 26 mit einer Schraubmutter 27 verschraubt werden kann, wodurch die beiden Stifte 24 und 25 aufeinander zu bewegt werden und damit die Bandbride 1 spannen.

Es ist auch möglich, einen der Stifte 24 oder 25 mit einer Gewindebohrung zu versehen und den anderen Stift mit einer Durchgangsbohrung, so daß die Schraube dann direkt in die Gewindebohrung eingeschraubt werden kann.

Die Fig. 4 und 5 zeigen in perspektivischer und damit verständlicherer Ansicht die Bandbride ohne Rohre und ohne die Stifte und Schrauben.

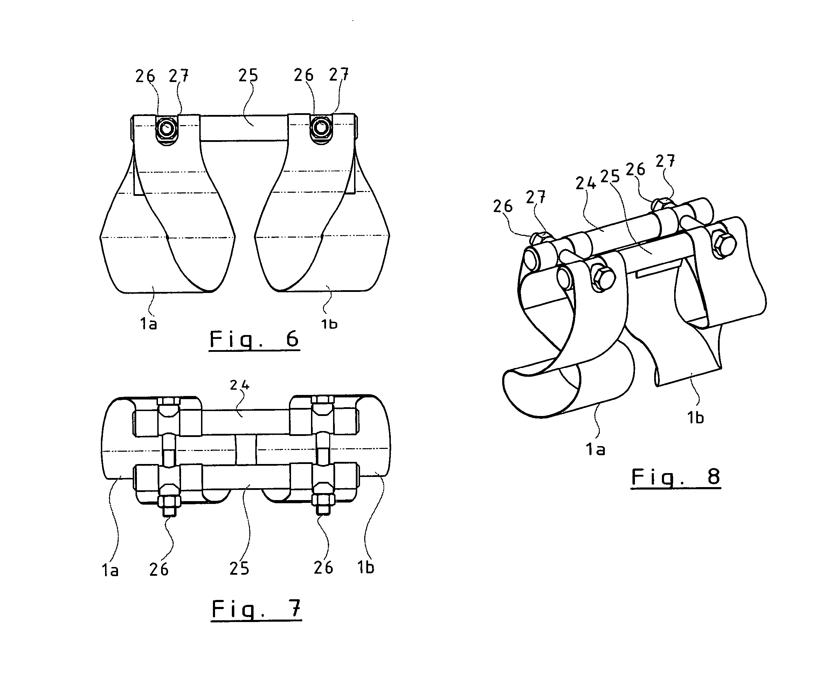

Die Fig. 6, 7 und 8 zeigen ein Ausführungsbeispiel der Erfindung mit zwei Bandbriden 1a und 1b, die in Längsrichtung der nicht dargestellten Rohre hintereinander angeordnet sind, wobei beide Bandbriden 1a und 1b jeweils gemeinsame Stifte 24 und 25 nutzen, die entsprechend dem Ausführungsbeispiel der Fig. 2 und 3 miteinander verschraubt sind. Je nach Anforderung an den Einzelfall können auch mehr als zwei Bandbriden in Längsrichtung der Rohre hintereinander angeordnet werden, wobei auch dann die Stifte 24 und 25 von allen Bandbriden gemeinsam genutzt werden.

Aus Fig. 2 ist deutlich zu erkennen, daß der Abstand der beiden Rohre 19 und 20 bei entsprechender Verspannung lediglich der einfachen Dicke des Materiales der Bandbride entspricht, wobei in der Praxis ein Metallband mit einer Materialdicke von 1 mm für auch mechanisch stark belastete Anwendungsfälle ausreicht.

Ein konkretes Anwendungsbeispiel der Bandbride nach der Erfindung ist die Befestigung von Auslegerrohren für Ausleger von Fahrleitungen von Schienenfahrzeugen. Selbstverständlich sind andere Applikationen möglich, beispielsweise im Sanitärbereich oder sonstigen mechanischen Anwendungen, bei denen Rohre oder Stangen parallel verlaufend miteinander verbunden werden sollen.

## Patentansprüche

1. Bandbride mit einem langgestreckten biegbaren Band, das im wesentlichen konstante Breite (B) aufweist und im Bereich seiner Enden (6, 7) je eine Öffnung (16, 17) zum Einsetzen einer Spannvorrichtung (24, 25, 26, 27),
**dadurch gekennzeichnet,**
**daß** die Bandbride (1) ausgehend von einer Stirnseite (6) jeweils unmittelbar aufeinanderfolgend
- einen geradlinigen ersten Abschnitt (2),
- einen konvex gebogenen zweiten Abschnitt (3) ,
- einen konkav gebogenen dritten Abschnitt (4) und
- einen geradlinigen vierten Abschnitt (5) aufweist und
**daß** an gegenüberliegenden Seitenkanten (9, 8) liegende Scheitelpunkte (14, 15) des konvexen (3) und des konkaven (4) Abschnittes jeweils um eine Länge (D) nach innen zur Bandmitte (12) hin versetzt sind.

2. Bandbride nach Anspruch 1, **dadurch gekennzeichnet,**
**daß** die Länge (D) des Versatzes der Dicke des Materiales der Bandbride (1) entspricht.

3. Bandbride nach Anspruch 1 oder 2, **dadurch gekennzeichnet, daß** zwei Hälften der Bandbride (1) zu zwei rechtwinklig zueinanderstehenden Achsen (13, 18) spiegelsymmetrisch sind.

4. Bandbride nach einem der Ansprüche 1 bis 3, **dadurch gekennzeichnet,**
**daß** beide geradlinigen Abschnitte (2, 5) jeweils ein Langloch (16, 17) aufweisen.

5. Bandbride nach Anspruch 4, **dadurch gekennzeichnet,**
**daß** die geradlinigen Abschnitte (2, 5) zur Bildung einer Schlaufe (22, 23) umgebogen sind, daß in beide Schlaufen (22, 23) je ein Stift (24, 25) eingesetzt ist und
**daß** beide Stifte (24, 25) mit einer Schraube (26) spannbar verbunden sind.

6. Bandbride nach Anspruch 5, **dadurch gekennzeichnet,**
**daß** mindestens zwei Bandbriden (1a, 1b) hintereinander in einer Linie angeordnet sind und daß deren Schlaufen (22 und 23) je ein gemeinsamer Stift (24, 25) eingesetzt ist, wobei die Stifte (24, 25) an jeder Bandbride (1a, 1b) durch eine Schraube (26) miteinander spannbar verbunden sind.

7. Bandbride nach einem der Ansprüche 1 bis 6, **dadurch gekennzeichnet,**
**daß** sie aus biegbarem zugfestem Metall ist.
